# EUROPÄISCHE PATENTANMELDUNG

(11) **EP 1 312 913 A1**
(43) Veröffentlichungstag der Anmeldung: **21.05.2003**
(21) Anmeldenummer: 02023587.5
(22) Anmeldetag: 23.10.2002
(51) Int. Cl.: G01N 27/38, G01N 27/416, G01N 33/00

(54) **Automatisierbare Mess, Reinigungs-und/oder Kalibriereinrichtung für Elektroden zur Messung von pH-Werten oder Redoxpotentialen und ein Verfahren zum Betreiben einer solchen Einrichtung**

(30) Priorität: 14.11.2001 DE 10155886
(71) Anmelder: Endress + Hauser Conducta Gesellschaft für Mess- und Regeltechnik mbH + Co.KG., D-70839 Gerlingen (DE)
(72) Erfinder: Wittmer, Detlev, Dr., 75433 Maulbronn (DE); Götz, Berthold, 71254 Ditzingen (DE); Gunzert, Michael, 74388 Talheim (DE)
(74) Vertreter: Andres, Angelika

(57) **Zusammenfassung**

Die vorliegende Erfindung betrifft eine automatisierbare Mess-, Reinigungs- und/oder Kalibriereinrichtung für Elektroden zur Messung von pH-Werten oder Redoxpotentialen, insbesondere in der Prozesstechnik, mit einem Messumformer (8), der einen programmierbaren Prozessrechner zur Ausführung von Prozessschritten aufweist, und mit einer Steuereinheit (10), die mehrere Stellglieder (44) und/oder Signaleingänge (42) und/oder Signalausgänge (40) aufweist.

Zur besseren Programmierbarkeit der Einrichtung ist eine funktionale Trennung zwischen dem Messumformer (8) und der Steuereinheit (10) vorgesehen, wobei ein Datenaustausch über eine bidirektionale Kommunikationsverbindung (13) erfolgt.

Darüber hinaus wird ein Verfahren zum Betrieb dieser automatisierbaren Mess-, Reinigungs- und/oder Kalibriereinrichtung für Elektroden zur Messung von pH-Werten oder Redoxpotentialen beschrieben.

## Beschreibung

Die vorliegende Erfindung betrifft eine automatisierbare Mess-, Reinigungs- und/oder Kalibriereinrichtung für Elektroden zur Messung von pH-Werten oder Redoxpotentialen, insbesondere in der Prozesstechnik, mit einem Messumformer, der einen programmierbaren Prozessrechner zur Ausführung von Prozessschritten aufweist, und mit einer Steuereinheit, die mehrere Stellglieder und/oder Signaleingänge und/oder Signalausgänge aufweist.

Ferner betrifft die vorliegende Erfindung ein Verfahren zum Betrieb einer automatisierbaren Mess-, Reingigungs- und/oder Kalibriereinrichtung des vorstehend genannten Typs.

Einrichtungen der vorstehend genannten Art sind bekannt und werden in der Prozessindustrie, in der Abwasseraufbereitung, aber auch in der Lebensmittel- und Pharmaindustrie zur Ermittlung von pH-Werten oder Redoxpotentialen eines Prüfmediums eingesetzt.

Um die Standzeit der zur Messung eingesetzten Elektroden zu erhöhen und die Messgenauigkeit der Einrichtung sicherzustellen, ist eine periodische Reinigung und Kalibrierung der Einrichtung vorgesehen. Die Prozesse der Reinigung und Kalibrierung sind automatisiert und werden durchgeführt, indem die Elektrode unter Abwesenheit des Prüfmediums zunächst mit einer Reinigungslösung gereinigt wird, um an der Elektrode haftende Rückstände des Prüfmediums zu entfernen. Nach der Reinigung wird der Elektrode eine Kalibrierlösung mit genau definiertem pH-Wert zugeführt, wodurch ein Abgleichvorgang der Messeinrichtung ermöglicht wird.

Der vorliegenden Erfindung liegt die Aufgabe zugrunde, eine Mess-, Reinigungsund/oder Kalibriereinrichtung der eingangs genannten Art dahingehend zu verbessern, dass Prozesse einfacher automatisierbar und den Prozessschritten zugrunde liegende Programmabläufe einfacher programmierbar sind.

Ausgehend von einer Mess-, Reinigungs- und/oder Kalibriereinrichtung der eingangs genannten Art wird diese Aufgabe erfindungsgemäß dadurch gelöst, dass Prozessschritte, die eine Ansteuerung der Stellglieder oder der Signalausgänge der Steuereinheit bzw. das Erfassen von Signalen an den Signaleingängen der Steuereinheit beinhalten, nur von der Steuereinheit ausführbar sind, und dass entsprechende Befehle zur Ausführung solcher Prozessschritte von dem Messumformer zu der Steuereinheit übertragbar sind.

Auf diese Weise ist es möglich, sehr komplexe Prozessabläufe, wie z.B. ein Zusammenwirken mehrerer Stellglieder sowie gegebenenfalls die Erfassung von entsprechenden Eingangssignalen an den Signaleingängen der Steuereinheit und eine eventuell erforderliche Signalausgabe über die Signalausgänge der Steuereinheit zu koordinieren, und diese für den Messumformer bzw. dessen Prozessrechner transparent zu machen. Dieser Mechanismus erlaubt es, umfassende Steuerungs- und Regelungsvorgänge in einem Programm des Prozessrechners durch beispielsweise einen einzigen Befehl zu repräsentieren. Dadurch sind Programmabläufe einfacher programmierbar.

Bei herkömmlichen Mess-, Reinigungs- und/oder Kalibriereinrichtungen, deren Komponenten mit Hilfe speicherprogrammierbarer Steuerungen zur Ausführung von Prozessschritten gesteuert werden, erfolgt die Ansteuerung von Stellgliedern oder Signalausgängen bzw. das Erfassen von Eingangssignalen auch mehrerer Komponenten zentral durch die speicherprogrammierbare Steuerung. Dadurch ergibt sich insbesondere bei der Programmierung komplexer Prozessabläufe das Problem, stets die richtige programmtechnische Zuordnung zwischen einer in dem Prozessablauf benötigten Funktion der Mess-, Reinigungs- und/oder Kalibriereinrichtung und beispielsweise der Ansteuerung des entsprechenden Stellglieds sicherzustellen.

Völlig neuartig bei Mess-, Reinigungs- und/oder Kalibriereinrichtungen der eingangs genannten Art ist die Verwirklichung eines aus der objektorientierten Programmierung bekannten Prinzips, des sogenannten "Information Hiding". Damit werden ganz allgemein Maßnahmen bezeichnet, die zum Ziel haben, Betriebsgrößen abgeschlossener funktionaler Einheiten nur innerhalb der jeweiligen funktionalen Einheit zu verwenden, der sie zugeordnet sind. Besonders bei sehr komplexen Systemen wird damit verhindert, dass innerhalb einer ersten funktionalen Einheit Betriebsgrößen versehentlich verwendet bzw. modifiziert werden, die ausschließlich zur Verarbeitung von Prozessabläufen innerhalb einer zweiten funktionalen Einheit bestimmt sind.

Für Systeme mit niedrigeren Anforderungen an die Messgenauigkeit ist eine Kalibrierung und die dazu erforderliche Einrichtung nicht zwingend erforderlich. Solche Mess- und Reinigungseinrichtungen profitieren jedoch auch von der einfacheren Automatisierbarkeit und Programmierbarkeit.

Eine Ausführungsform der erfindungsgemäßen Mess-, Reinigungs- und/oder Kalibriereinrichtung ist dadurch gekennzeichnet, dass zur Übertragung der Befehle zwischen Messumformer und Steuereinheit eine bidirektionale Kommunikationsverbindung, vorzugsweise eine Schnittstelle vom Typ RS 485, vorgesehen ist.

Eine weitere Ausführungsform der erfindungsgemäßen Mess-, Reinigungs- und/oder Kalibriereinrichtung sieht vor, dass zur Kommunikation über die Kommunikationsverbindung ein Master-Slave-Protokoll vorgesehen ist, wobei der Messumformer den Master und die Steuereinheit den Slave darstellt. Dieses Prinzip stellt sicher, dass der programmtechnische Aufwand in der Steuereinheit zum Betrieb der Kommunikation mit dem Messumformer minimal ist. Gemäß dem vorgeschlagenen Master-Slave-Protokoll wartet die Steuereinheit, bis sie einen Befehl vom Messumformer erhält, arbeitet dann gegebenfalls einen vorgegebenen Prozessablauf in Abhängigkeit des empfangenen Befehls ab und gibt eine Statusmeldung an den Messumformer zurück.

Bei entsprechender Ausgestaltung des Master-Slave-Protokolls und der bidirektionalen Kommunikationsverbindung ist es möglich, einen Messumformer mit mehreren Steuereinheiten zu verbinden, die beispielsweise jeweils eine Elektrodenarmatur kontrollieren. Es ist auch möglich, dass ein Messumformer mehrere Messkanäle aufweist.

Eine besonders vorteilhafte Ausführungsform der Erfindung sieht vor, dass im Messumformer eine Schnittstelle zum Anschluss eines Personalcomputers vorgesehen ist, über die der Prozessrechner mit Hilfe des Personalcomputers programmierbar ist, und/oder eine Feldbus-, Profibus-, HART- oder FOUNDATION Fieldbus-Schnittstelle. Diese Art der Programmierung des Prozessrechners ist besonders vorteilhaft, da die zumeist komplexen Prozessabläufe nicht vor Ort, d.h. direkt an der Mess-, Reinigungs- und/oder Kalibriereinrichtung programmiert werden müssen. Ein weiterer Vorteil besteht darin, dass durch die Bereitstellung entsprechender Software-Tools für den Personalcomputer beispielsweise eine graphische Programmierung der Prozessabläufe möglich ist, die sich auch bei anderen Systemen als sehr zweckmäßig herausgestellt hat.

Darüberhinaus ist es möglich, die vorgeschlagene Schnittstelle zum Anschluss eines Personalcomputers derart auszulegen, dass auch ein Halbleiterspeicher, insbesondere ein EEPROM/Flash-Speicher, anschließbar ist, so dass in den Halbleiterspeicher programmierte Prozessabläufe von dem Messumformer auslesbar sind und umgekehrt. Außerdem ist dadurch möglich, Prozessabläufe sehr einfach auf mehrere Mess-, Reinigungs- und Kalibriereinrichtungen zu übertragen. Mess- und Kalibrierdaten können ebenso auf diese Weise kommuniziert und gesichert werden.

Bei einer weiteren Ausführungsform der Erfindung wird vorgeschlagen, im Messumformer eine separate Schnittstelle zum Anschluss des Halbleiterspeichers vorzusehen.

Die EEPROM/Fiash-Speicher können durch eine Programmiereinrichtung mit den auszuführenden Prozessabläufen programmiert werden und danach können die auf diese Weise programmierten EEPROM/Fiash-Speicher mit der entsprechenden Schnittstelle der Mess-, Reinigungs- und/oder Kalibriereinrichtung verbunden werden, so dass die Informationen über die in den EEPROM/Flash-Speichern programmierten Prozessabläufe von dem Messumformer auslesbar sind.

Als eine weitere Lösung der Aufgabe der vorliegenden Erfindung wird ausgehend von dem eingangs genannten Verfahren zum Betrieb einer automatisierbaren Mess-, Reinigungs- und/oder Kalibriereinrichtung vorgeschlagen, dass Prozesschritte, die eine Ansteuerung der Stellglieder und/oder der Signalausgänge der Steuereinheit und/oder das Erfassen von Signalen an den Signaleingängen der Steuereinheit beinhalten, nur von der Steuereinheit ausgeführt werden, und dass entsprechende Befehle zur Ausführung solcher Prozessschritte von dem Messumformer zu der Steuereinheit übertragen werden.

Ein in der Steuereinheit implementiertes Sicherheitskonzept sieht vor, dass die Signalausgänge bei einem Ausfall der elektrischen Energieversorgung einen definierten Zustand einnehmen, wodurch Stellglieder, pneumatisch angetriebene Elemente und dergleichen in einen sicheren Abschaltzustand, wie z.B. eine Serviceposition, überführt werden können.

Das Sicherheitskonzept kann zur Berücksichtigung folgender Fehlerfälle erweitert werden: Ausfall von Druckluft oder Wasser, und Unterbrechung der Kommunikation. Auch bei diesen Fehlern ist ein definierter Abschaltzustand zweckmäßig.

Sobald der Fehler behoben ist, wird ein Neustart oder Wiederanfahrprogramm die geordnete Wiederaufnahme des Betriebes einleiten.

Eine Ausführungsform des erfindungsgemäßen Verfahrens ist dadurch gekennzeichnet, dass die Befehle über eine bidirektionale Kommunikationsverbindung übertragen werden und dass die Kommunikation nach dem Master-Slave-Prinzip abläuft, wobei der Messumformer den Master und die Steuereinheit den Slave darstellt.

Eine weitere Ausführungsform des erfindungsgemäßen Verfahrens ist dadurch gekennzeichnet, dass die Steuereinheit nach dem Einschalten in einen Service-Zustand geht, in dem sie auf einen ersten Befehl von dem Messumformer wartet, dass die Steuereinheit nach Empfang des ersten Befehls vom Messumformer den ersten Befehl ausführt und danach eine Status-Rückmeldung an den Messumformer sendet, und dass die Steuereinheit nach dem Senden der Status-Rückmeldung in einen Wartezustand geht, in dem sie auf weitere Befehle des Messumformers wartet.

Eine andere Ausführungsform des erfindungsgemäßen Verfahrens sieht vor, dass der Messumformer nach dem Einschalten eine Initialisierungsphase durchläuft, dass der Messumformer nach der Initialisierungsphase einen ersten Befehl an die Steuereinheit sendet, um beispielsweise die Hardware- und Software-Version der Steuereinheit zu ermitteln, dass der Messumformer nach dem Empfang einer entsprechenden Status-Rückmeldung von der Steuereinheit einen von einem Prozessablauf abhängigen Befehl an die Steuereinheit sendet, und dass der Messumformer nach Empfang einer entsprechenden Status-Rückmeldung von der Steuereinheit weitere Prozessschritte ausführt.

Weitere Merkmale, Anwendungsmöglichkeiten und Vorteile ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Fig. 1: Eine schematische Ansicht einer erfindungsgemäßen automatisierbaren Mess-, Reinigungs- und Kalibriereinrichtung;
- Fig. 2: eine schematische Ansicht der Steuereinheit aus Fig. 1 in vergrößerter Darstellung;
- Fig. 3: einen Prozessablaufplan, der die zur Ausführung in der Steuereinheit aus Fig. 2 bestimmten Schritte des erfindungsgemäßen Verfahrens aufweist;
- Fig. 4: einen Programmablaufplan, der die im Messumformer aus Fig. 1 auszuführenden Schritte des erfindungsgemäßen Verfahrens aufweist.

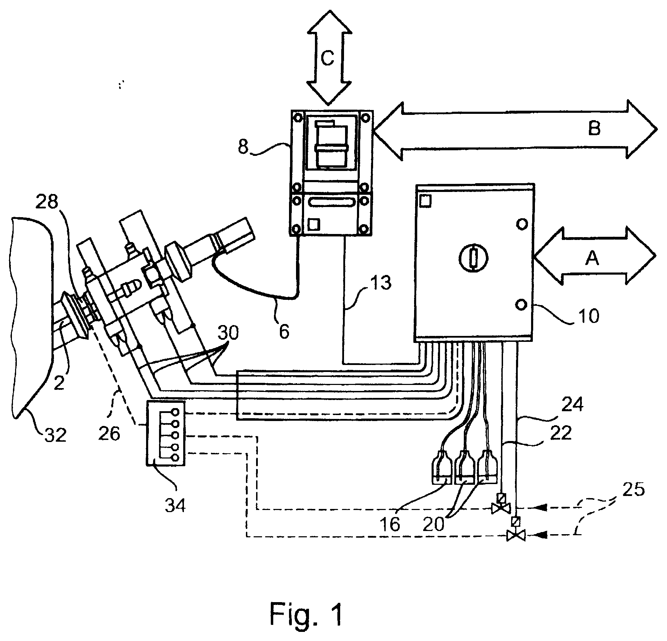

Fig. 1 zeigt eine schematische Darstellung einer automatisierbaren Mess-, Reinigungs- und Kalibriereinrichtung für Elektroden zur Messung von pH-Werten oder Redoxpotentialen.

Die Elektrode 2 ist in einer Elektrodenarmatur 4 angebracht und über ein Elektrodenkabel 6 mit einem Messumformer 8 verbunden. Der Messumformer 8 ist über eine Kommunikationsverbindung 13 mit einer Steuereinheit 10 verbunden.

Die Steuereinheit 10 weist Anschlüsse für pneumatische Steuerleitungen 30 auf, die zu der Elektrodenarmatur 4 führen. Darüberhinaus sind Vorratsbehälter für Kalibrierlösungen 20 sowie Reinigungsflüssigkeit 16 an die Steuereinheit 10 angeschlossen, welche mittels einer Pumpe in die Spülkammer 28 der Armatur gefördert werden.

Die Stellglieder 22 und 24 sind ebenfalls an die Steuereinheit 10 angeschlossen und wirken auf eine Zuführung 25 für Heißdampf oder andere Reinigungsmittel.

Eine ebenfalls in Fig. 1 dargestellte Spülblockanordnung 34 weist eine Mehrzahl von Ventilen auf und dient zur wahlweisen Zuführung von Wasser, Druckluft, Heißdampf in die Spülkammer 28, die über eine Förderleitung 26 mit der Spülblockanordnung 34 verbunden ist.

Die Steuereinheit 10 weist eine Schnittstelle A für Melde- und Steuersignale auf. Der Messumformer 8 weist eine Benutzerschnittstelle B und eine Schnittstelle C zu einem Personalcomputer auf, die im Folgenden kurz als PC-Schnittstelle bezeichnet wird.

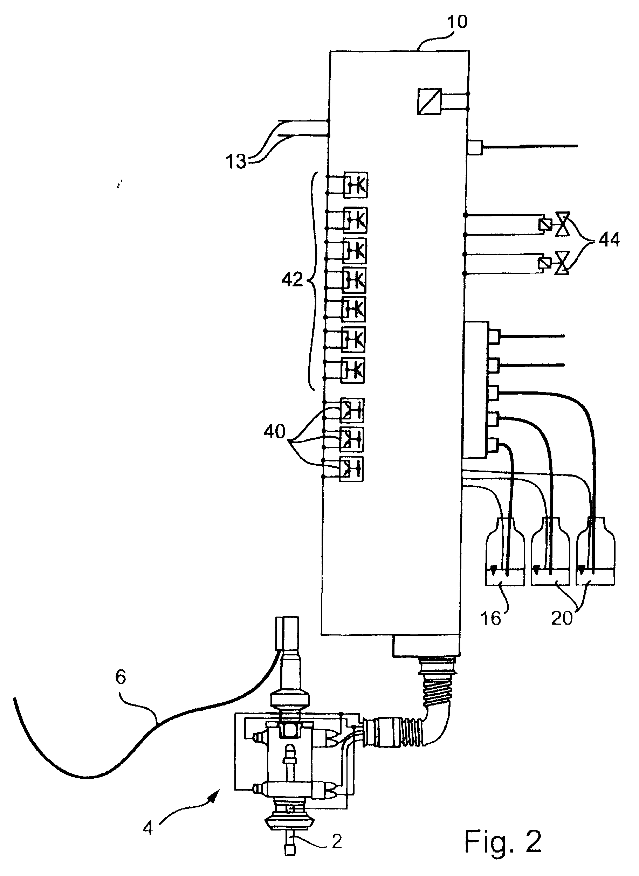

Fig. 2 zeigt eine vergrößerte Ansicht der Steuereinheit 10 aus Fig. 1. Die Steuereinheit 10 weist mehrere Signaleingänge 42 sowie mehrere Signalausgänge 40 auf. Ebenso dargestellt sind weitere Stellglieder 44.

Nachfolgend wird die Funktionsweise der in den Fig. 1 und 2 abgebildeten automatisierbaren Mess-, Reinigungs- und Kalibriereinrichtung näher erläutert.

Der Messumformer 8 weist einen Prozessrechner zur Ausführung von Prozessschritten auf. Solche Prozessschritte bestehen beispielsweise aus dem Verfahren der Elektrode 2 innerhalb der Elektrodenarmatur 4 zwischen einer ersten Position innerhalb eines Prozessbehälters 32 und einer zweiten Position, in der die Elektrode 2 innerhalb der Spülkammer 28 gereinigt werden kann. Dazu sind in der Elektrodenarmatur 4 befindliche pneumatische Stellglieder über die pneumatischen Steuerleitungen 30 von der Steuereinheit 10 entsprechend ansteuerbar.

Weitere Prozessschritte bestehen aus dem Fördern von Reinigungsflüssigkeit 16 oder Kalibrierlösungen 20 aus den an die Steuereinheit 10 angeschlossenen Vorratsbehältern, aus der Ansteuerung der Spülblockanordnung 34, sowie aus der Erfassung von Messwerten oder der Ausgabe von Signalen.

Es existieren auch Prozessschritte, bei denen eine komplexe zeitliche Abfolge von Ansteuerungen der an die Steuereinheit 10 angeschlossenen Stellglieder erforderlich ist.

Die Prozessschritte, die direkt an den Messumformer 8 angeschlossene Komponenten verwenden, werden von dem Prozessrechner des Messumformers 8 ausgeführt. Ein Beispiel dafür ist die Erfassung von Messwerten, die von der Elektrode 2 über das Elektrodenkabel 6 direkt an den Messumformer 8 geliefert werden.

Ein weiteres Beispiel umfasst all diejenigen Prozesse, die für eine Interaktion mit einer Bedienperson über die Benutzerschnittstelle B erforderlich sind. Darunter fällt die manuelle Auswahl von Betriebsmodi der Einrichtung, die Programmierung des Prozessrechners, aber auch die Anzeige von Prozessdaten.

Eine Programmierung des Prozessrechners ist auch über die PC-Schnittstelle C möglich. Besonders vorteilhaft ist hierbei die Möglichkeit, Prozessabläufe mit Hilfe von Software-Tools grafisch zu programmieren.

Es ist ferner möglich, einen EEPROM/Flash-Speicher an die Schnittstelle C anzuschließen, sodass in den EEPROM/Flash-Speicher programmierte Prozessabläufe von dem Messumformer 8 auslesbar sind. Diese Prozessabläufe können dann auch von dem Prozessrechner ausgeführt werden.

Eine separate Schnittstelle für EEPROM/Flash-Speicher kann zusätzlich zu der PC-Schnittstelle C ebenfalls vorgesehen sein.

Es existieren Prozessschritte, die eine Ansteuerung der Stellglieder 44, 22, 24 und/oder der Signalausgänge 40 der Steuereinheit 10 und/oder das Erfassen von Signalen an den Signaleingängen 42 der Steuereinheit 10 oder die Ansteuerung der pneumatischen Steuerleitungen 30 sowie der Stellglieder der Vorratsbehälter 16 und 20 aufweisen. Diese Prozessschritte sind dadurch gekennzeichnet, dass sie unter Verwendung der an die Steuereinheit 10 angeschlossenen Komponenten der Steuereinrichtung durchgeführt werden. Solche Prozessschritte werden allein von der Steuereinheit 10 ausgeführt. Die zur Ausführung dieser Prozessschritte erforderlichen Betriebsgrößen bzw. Informationen sind nur in der Steuereinheit 10 gespeichert und sind daher nicht in dem Programm des Prozessrechners des Messumformers 8 enthalten.

Zur Ausführung eines solchen Prozessschrittes sendet der Messumformer 8 einen entsprechenden Befehl über die bidirektionale Kommunikationsverbindung 13 an die Steuereinheit 10. Nach Empfang dieses Befehls führt die Steuereinheit 10 den entsprechenden Prozessschritt aus und sendet eine Status-Rückmeldung an den Messumformer 8 zurück.

Zur Realisierung dieser funktionalen Trennung zwischen Messumformer 8 und Steuereinheit 10 muss der Prozessrechner des Messumformers 8 lediglich die von der Steuereinheit 10 ausführbaren Befehle kennen. Beispiele für solche Befehle sind ein Befehl zum Abfragen des Status der Steuereinheit 10, ein Befehl zum Verfahren der Elektrode 2 in Messposition, ein Befehl zum Verfahren der Elektrode 2 in Wartungsposition, Befehle zum Fördern von Reinigungs- bzw. Kalibrierlösungen und dgl.

Diese funktionale Trennung ist unter dem Begriff "Information Hiding" bekannt, vgl. "On the Criteria to be used in Decomposing Systems into Modules", David Parnas, 1972, und kann sehr vorteilhaft auch bei der vorliegenden Einrichtung angewandt werden. Ziel des Information Hiding ist es, Betriebsgrößen abgeschlossener funktionaler Einheiten nur innerhalb der jeweiligen funktionalen Einheit, wie z.B. der Steuereinheit 10, zu verwenden und benutzbar zu machen, um eine versehentliche Veränderung innerhalb einer anderen funktionalen Einheit, z.B. in dem Messumformer 8, auszuschließen.

Die Flexibilität und Programmierbarkeit der Einrichtung wird durch die Auslagerung der angesprochenen Prozessschritte vom Prozessrechner des Messumformers 8 in die Steuereinheit 10 verbessert. Die Programmierung von Prozessabläufen zur Automatisierung kann unter Verwendung der Befehle für die Ansteuerung der Steuereinheit 10 wesentlich einfacher gehalten werden, da sämtliche Betriebsgrößen der Steuereinheit 10, die beispielsweise mit der Zeitsteuerung von Stellgliedern der Steuereinheit 10 zusammenhängen, nicht in dem Prozessrechner des Messumformers 8 gespeichert sind. Diese Betriebsgrößen sind nur in der Steuereinheit 10 gespeichert und werden auch nur dort verarbeitet. Dadurch wird der Prozessrechner des Messumformers 8 entlastet. Außerdem wird auch das Risiko von Programmierfehlern vermindert und die Lesbarkeit und Übersichtlichkeit von entsprechenden Programmen gesteigert.

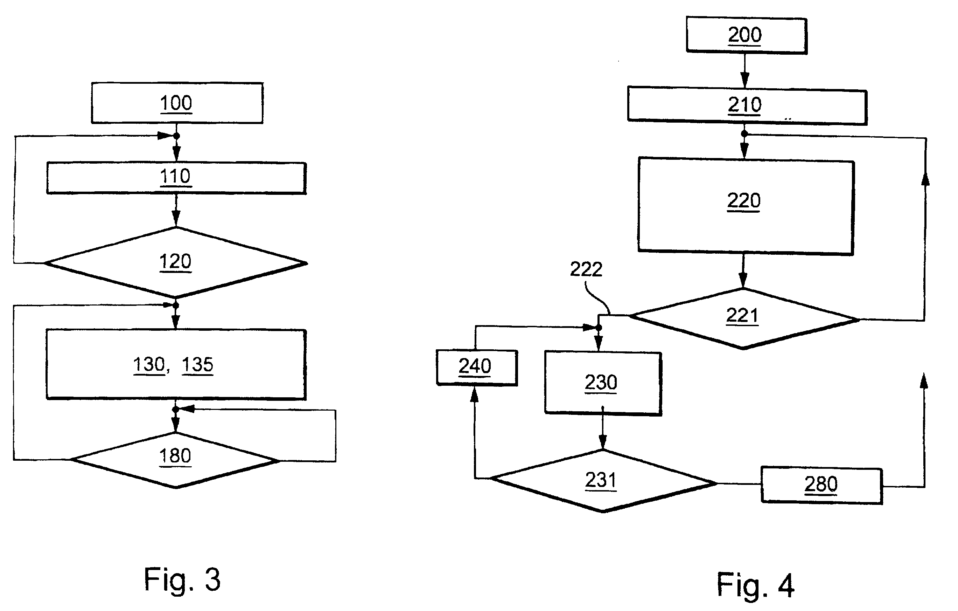

Nachstehend wird eine beispielhafte Kommunikation anhand der in den Fig. 3 und 4 dargestellten Programmablaufpläne zwischen dem Messumformer 8 und der Steuereinheit 10 erläutert.

Zunächst wird die Umsetzung des erfindungsgemäßen Verfahrens in der Steuereinheit 10 der automatisierbaren Mess-, Reinigungs- und Kalibriereinrichtung in Fig. 3 betrachtet.

Nach dem Einschalten 100 der Steuereinrichtung 10 befindet sich die Steuereinheit 10 in dem Servicezustand 110. Dann wartet die Steuereinheit 10 auf einen Befehl des Messumformers 8, was durch die Abfrage 120 dargestellt ist. Solange kein Befehl vom Messumformer 8 empfangen wird, verbleibt die Steuereinheit 10 im Servicezustand 110.

Nach dem Empfang eines Befehls wird dieser in Zustand 130 ausgeführt, und direkt im Anschluss an die Ausführung 130 des Befehls wird eine entsprechende Status-Rückmeldung 135 über die bidirektionale Kommunikationsverbindung 13 an den Messumformer 8 ausgegeben. Nach der Ausgabe der Status-Rückmeldung 135 verbleibt die Steuereinheit 10 in einem Wartezustand 180, bis erneut ein Befehl von dem Messumformer 8 empfangen wird. In dem Wartezustand 180 wird ständig der Empfang eines neuen Befehls abgefragt.

Wie in Fig. 4 dargestellt, durchläuft der Messumformer 8 nach dem Einschalten 200 eine Initialisierungsphase 210. Nach Abschluss der Initialisierungsphase 210 sendet der Messumformer 8 einen ersten Befehl 220 über die bidirektionale Kommunikationsverbindung 13 an die Steuereinheit 10.
Mit diesem ersten Befehl 220 wird beispielsweise die Hardware- und Software-Version der Steuereinheit 10 abgefragt.

Danach wartet der Messumformer 8 in dem Zustand 221 auf eine Status-Rückmeldung von der Steuereinheit 10. Wenn z.B. innerhalb einer vorgegebenen Wartezeit keine Status-Rückmeldung im Messumformer 8 empfangen wurde, sendet der Messumformer 8 erneut den ersten Befehl 220 an die Steuereinheit.

Sobald der Messumformer 8 die Status-Rückmeldung erhalten hat, kann er im Zustand 230 Befehle oder auch Statusanfragen an die Steuereinheit 10 schicken. Die weitere Verarbeitung 240 erfolgt erst nach Erhalt einer entsprechenden Status-Rückmeldung 231. Im Anschluss daran kann erneut ein Befehl bzw. eine Statusanfrage von dem Messumformer 8 an die Steuereinheit 10 geschickt werden.

Falls innerhalb einer vorgebbaren Wartezeit keine Status-Rückmeldung 231 empfangen wird, wird eine Routine 280 zur Fehlerbehandlung aufgerufen, nach deren Abarbeitung der Messumformer 8 z.B. wieder in die Initialisierungsphase 210 versetzt werden kann.

Die Kommunikation zwischen dem Messumformer 8 und der Steuereinheit 10 über die bidirektionale Kommunikationsverbindung 13 läuft gemäß den Figuren 3, 4 nach einem Master-Slave-Protokoll ab, wobei der Messumformer 8 den Master und die Steuereinheit 10 den Slave darstellt.

Im Falle eines Kommunikationsausfalls wird im Messumformer 8 ein Fehler gespeichert. Die Steuereinheit 10 wird zurückgesetzt und die Stellglieder 44 nehmen eine Ausgangslage ein.

Bei Druckluftausfall werden die Stellglieder 44 mit Hilfe des Restluftdrucks in eine definierte Serviceposition gefahren, und an den Messumformer 8 wird eine Fehlermeldung übertragen.

Es ist auch möglich, mehrere Steuereinheiten 10 zusammen mit dem Messumformer 8 zu betreiben. Dazu muss das Master-Slave-Protokoll so ausgelegt werden, dass der Messumformer 8 beispielsweise über eine in den Befehlen enthaltene Adresse genau eine der mehreren Steuereinheiten 10 ansprechen kann. Auf diese Weise sind mit dem Messumformer 8 mittels mehrerer Steuereinheiten 10 mehrere Elektrodenarmaturen ansteuerbar. Der Messumformer 8 kann mehrere Messkanäle besitzen.

## Patentansprüche

1. Automatisierbare Mess-, Reinigungs- und/oder Kalibriereinrichtung für Elektroden zur Messung von pH-Werten oder Redoxpotentialen, insbesondere'in der Prozesstechnik, mit einem Messumformer (8), der einen programmierbaren Prozessrechner zur Ausführung von Prozessschritten aufweist, und mit einer Steuereinheit (10), die mehrere Stellglieder (44) und/oder Signaleingänge (42) und/oder Signalausgänge (40) aufweist,
**dadurch gekennzeichnet,**
**dass** Prozessschritte, die eine Ansteuerung der Stellglieder (44) und/oder der Signalausgänge (40) der Steuereinheit (10) und/oder das Erfassen von Signalen an den Signaleingängen (42) der Steuereinheit (10) beinhalten, nur von der Steuereinheit (10) ausführbar sind, und dass entsprechende Befehle zur Ausführung solcher Prozessschritte von dem Messumformer (8) zu der Steuereinheit (10) übertragbar sind.

2. Einrichtung nach Anspruch 1, **dadurch gekennzeichnet, dass** zu der Übertragung der Befehle eine bidirektionale Kommunikationsverbindung (13), vorzugsweise eine Schnittstelle vom Typ RS 485, vorgesehen ist.

3. Einrichtung nach Anspruch 1 oder 2, **dadurch gekennzeichnet, dass** zur Kommunikation über die Kommunikationsverbindung (13) ein Master-Slave-Protokoll vorgesehen ist, wobei der Messumformer (8) den Master und die Steuereinheit (10) den Slave darstellt.

4. Einrichtung nach einem der vorstehenden Ansprüche, **dadurch gekennzeichnet, dass** im Messumformer (8) eine Schnittstelle (C) zum Anschluss eines Personalcomputers vorgesehen ist, über die der Prozessrechner mit Hilfe des Personalcomputers programmierbar ist, und/oder eine Feldbus-, Profibus-, HART- oder FOUNDATION Fieldbus-Schnittstelle.

5. Einrichtung nach Anspruch 4, **dadurch gekennzeichnet, dass** an die Schnittstelle (C) auch ein Halbleiterspeicher, insbesondere ein EEPROM/Flash-Speicher, anschließbar ist, und dass in den Halbleiterspeicher programmierte Prozessabläufe und/oder Parametrierdaten und/oder aufgezeichnete Mess- und/oder Kalibrierdaten von dem Messumformer (8) auslesbar und/oder einprogrammierbar sind.

6. Einrichtung nach Anspruch 5, **dadurch gekennzeichnet, dass** im Messumformer (8) eine separate Schnittstelle zum Anschluss des Halbleiterspeichers vorgesehen ist.

7. Einrichtung nach einem der vorstehenden Ansprüche, **dadurch gekennzeichnet, dass** mindestens eine Steuereinheit (10) vorgesehen ist, und dass der Messumformer (8) mindestens einen Messkanal aufweist.

8. Verfahren zum Betrieb einer automatisierbaren Mess-, Reinigungs- und/oder Kalibriereinrichtung für Elektroden zur Messung von pH-Werten oder Redoxpotentialen, insbesondere in der Prozesstechnik, mit einem Messumformer (8), der einen programmierbaren Prozessrechner zur Ausführung von Prozessschritten aufweist, und mit einer Steuereinheit (10), die mehrere Stellglieder (44) und/oder Signaleingänge (42) und/oder Signalausgänge (40) aufweist, **dadurch gekennzeichnet, dass** Prozessschritte, die eine Ansteuerung der Stellglieder (44) und/oder der Signalausgänge (40) der Steuereinheit (10) und/oder das Erfassen von Signalen an den Signaleingängen (42) der Steuereinheit (10) beinhalten, nur von der Steuereinheit (10) ausgeführt werden, und dass entsprechende Befehle zur Ausführung solcher Prozessschritte von dem Messumformer (8) zu der Steuereinheit (10) übertragen werden.

9. Verfahren nach Anspruch 8, **dadurch gekennzeichnet, dass** die Befehle über eine bidirektionale Kommunikationsverbindung (13) übertragen werden, und dass die Kommunikation nach dem Master-Slave-Prinzip abläuft, wobei der Messumformer (8) den Master und die Steuereinheit (10) den Slave darstellt.

10. Verfahren nach Anspruch 9, **dadurch gekennzeichnet, dass** die Steuereinheit (10) nach dem Einschalten (100) in einen Servicezustand (110) geht, in dem sie auf einen ersten Befehl von dem Messumformer (8) wartet, dass die Steuereinheit (10) nach Empfang des ersten Befehls von dem Messumformer (8) den ersten Befehl (130) ausführt und danach eine Status-Rückmeldung (135) an den Messumformer (8) sendet, und dass die Steuereinheit (10) nach dem Senden der Status-Rückmeldung (135) in einen Wartezustand (180) geht, in dem sie auf weitere Befehle des Messumformers (8) wartet.

11. Verfahren nach Anspruch 10, **dadurch gekennzeichnet, dass** der Messumformer (8) nach dem Einschalten (200) eine Initialisierungsphase (210) durchläuft, dass der Messumformer (8) nach der Initialisierungsphase (210) einen ersten Befehl (220) an die Steuereinheit (10) sendet, dass der Messumformer (8) nach dem Empfang (222) einer entsprechenden Status-Rückmeldung von der Steuereinheit (10) einen von einem Prozessablauf abhängigen Befehl (230) an die Steuereinheit (10) sendet, und dass der Messumformer (8) nach Empfang einer entsprechenden Status-Rückmeldung (231) von der Steuereinheit (10) weitere Prozessschritte (240) ausführt.

12. Verfahren nach einem der Ansprüche 8 bis 11, **dadurch gekennzeichnet, dass** die Steuereinheit (10) bei Ausfall der Stromversorgung und/oder einer/der Kommunikationsverbindung (13) die Stellglieder (44) und/oder die Signalausgänge (40) in einen definierten Zustand bringt.
